# EUROPÄISCHE PATENTSCHRIFT

(11) **EP 2 596 047 B1**
(45) Veröffentlichungstag und Bekanntmachung des Hinweises auf die Patenterteilung: **25.06.2014**
(21) Anmeldenummer: 11732479.8
(22) Anmeldetag: 18.07.2011
(51) Int. Cl.: C08G 69/14, C08G 69/16, C08G 69/18, C08L 77/02, C09K 5/06, B01J 13/18, C08F 2/44, C08F 20/18, C08K 7/00, B29C 39/00, B29C 67/24

(54) **POLYAMID-FORMTEILE ENTHALTEND MIKROVERKAPSELTES LATENTWÄRMESPEICHERMATERIAL**
POLYAMIDE SHAPED PARTS CONTAINING MICRO-ENCAPSULATED LATENT HEAT-STORAGE MATERIAL
PIÈCES MOULÉES EN POLYAMIDE CONTENANT UN MATÉRIAU À CHANGEMENT DE PHASE MICROENCAPSULÉ

(30) Priorität: 20.07.2010 EP 10170161
(43) Veröffentlichungstag der Anmeldung: 29.05.2013
(73) Patentinhaber: BASF SE, 67056 Ludwigshafen (DE)
(72) Erfinder: DESBOIS, Philippe, 68535 Edingen-Neckarhausen (DE); SCHRÖDER-GRIMONPONT, Tina, 76764 Rheinzabern (DE); ALTMANN, Stephan, 67152 Ruppertsberg (DE); SCHMIDT, Marco, 67346 Speyer (DE)
(86) Internationale Anmeldenummer: PCT/EP2011/062202
(87) Internationale Veröffentlichungsnummer: WO 2012/010537

(56) Entgegenhaltungen:
- WO-A2-2008/071649
- DE-A1- 2 048 662

## Beschreibung

Die vorliegende Erfindung betrifft Polyamid-Formteile erhältlich durch anionische Polymerisation eines Lactams enthaltend Mikrokapseln mit einem Kapselkern aus Latentwärmespeichermaterial und einem Polymer als Kapselwand. Außerdem betrifft die vorliegende Erfindung ein Verfahren zu ihrer Herstellung, ihre Verwendung im Fahrzeugbau, als Batteriegehäuse, als Gehäuse für elektronische Kleingeräte und für Warmhaltesysteme für Speisen.

Polyamid-Formteile lassen sich durch die sogenannte alkalische Schnellpolymerisation, einer anionisch verlaufenden Polymerisation von Lactamen zu Polyamid dem sogenannten "Guß-Polyamid" herstellen. Im Unterschied zur üblichen Herstellung von Formteilen, wird nicht ein geschmolzenes Polymer geformt oder ein Präpolymer in einer Form nachvernetzt, sondern das Monomer bzw. ein Monomerengemisch direkt in der Form polymerisiert. Das Produkt der anionischen Polymerisation ist ein lineares Polyamid und damit ein Thermoplast. Vorteil der Guss-Polymerisation ist die Verarbeitung in einem Schritt vom Monomer zum fertigen Composite-Bauteil, wodurch höhere Füllgrade ermöglicht werden. Die anionische Polymerisation von Lactam wird in Gegenwart eines Katalysators durchgeführt, der die Reaktion beschleunigt bzw. die Reaktionstemperatur herabsetzt.

So beschreibt die DE-A-14 20 241 eine anionische Polymerisation von Lactamen in Gegenwart von Kaliumhydroxid als Katalysator und 1,6-bis-(N,N-dibutylureido)-hexan als Aktivator.

Polyamid-Formteile werden vermehrt anstelle von Metallen als Werkstoff eingesetzt. Sie haben jedoch im Gegensatz zu Metallen eine geringe Wärmekapazität. Daher war es Aufgabe der vorliegenden Erfindung die Wärmespeichereigenschaften der Polyamid-Formteile zu erhöhen.

In den letzten Jahren hat es vielfältige Entwicklungen auf dem Gebiet der mikroverkapselten Latentwärmespeicher gegeben. Die Funktionsweise der Latentwärmespeicher, oftmals auch als PCM (phase change material) bezeichnet, beruht auf der beim fest/flüssig-Phasenübergang auftretenden Schmelzenthalpie, die eine Energieaufnahme oder Energieabgabe an die Umgebung bedeutet. Sie können damit zur Temperaturkonstanthaltung in einem festgelegten Temperaturbereich verwendet werden.

So lehren die EP-A-1 029 018 und die EP-A 1 321 182 die Verwendung von Mikrokapseln mit einer Kapselwand aus hochvernetzten Methacrylsäureesterpolymer und einem Latentwärmespeicherkern in Bindebaustoffen wie Beton oder Gips. Die DE-A-101 39 171 beschreibt die Verwendung von mikroverkapselten Latentwärmespeichermaterialien in Gipskartonplatten. Die Mikrokapselwände werden durch Polymerisation von Methylmethacrylat und Butandioldiacrylat in Gegenwart von anorganischen festen Teilchen als Schutzkolloid aufgebaut. Ferner lehrt die WO 2005/116559 den Einsatz von mikroverkapselten Latentwärmespeichermaterialien in Spanplatten zusammen mit Melaminformaldehydharzen als Bindemittel. Die WO 2008/071649 beschreibt Mikrokapseln mit einer Kapselwand und einem Latentwärmespeicherkern, wobei der Kapselkern eine lipophile Substanz mit einem fest / flüssig Phasenübergang im Temperaturbereich von - 20°C bis 120°C ist.

Dem gemäß wurden Polyamid-Formteile gemäß Anspruch 1 gefunden, ein Verfahren zu ihrer Herstellung sowie ihre Verwendung im Fahrzeugbau, als Batteriegehäuse, als Gehäuse für elektronische Kleingeräte und für Warmhaltesysteme für Speisen.

Als Lactam eignen sich vorteilhaft Caprolactam, Piperidon, Pyrrolidon, Lauryllactam oder deren Mischungen, bevorzugt Caprolactam, Lauryllactam oder deren Mischungen, besonders bevorzugt Caprolactam oder Lauryllactam. Neben Copolymeren aus verschiedenen Lactamen als Monomere ist es auch möglich ein Lacton wie Caprolacton als Comonomer einzusetzten. Die Menge an Lactons als Comonomer sollte dabei 40 Gew.-% bezogen auf das Gesamtmonomer nicht überschreiten. Bevorzugt beträgt der Anteil an Lacton als Comonomer nicht mehr als 10 Gew.-% bezogen auf das Gesamtmonomer. Bevorzugt wird kein Lacton als Comonomer verwendet.

Die anionische Polymerisation wird in Gegenwart eines Aktivators durchgeführt. Unter einen Aktivator für die anionische Polymerisation wird im Rahmen dieser Anmeldung ein durch elektrophile Reste N-substituiertes Lactam oder eine Vorstufe davon verstanden, die zusammen mit einem Lactam in situ ein durch elektrophile Reste N-substituiertes Lactam bildet. Die Aktivatormenge definiert die Anzahl der wachsenden Ketten, da er das Anfangsglied in der Reaktion ist.

Als Aktivator eignen sich Isocyanate, Säurehalogenide oder deren Umsetzungsprodukte mit Lactamen.

Als Aktivator eignen sich ferner aliphatische Diisocyanate wie Butylendiisocyanat, Hexamethylendiisiocyanat, Octamethylendiisocynat, Decamethylendiisocyanat, Undodecamethylendiisocyanat, Dodecamethylendiisocyanat, als auch aromatische Diisocyanate wie Toluyldiisocyanat, Isophorondiisocyanat, 4,4'-Methylenbis(phenyl-isocyanat), 4,4'-Methylenbis(cyclohexylisocyanat) oder Polyisocyanate wie Isocyanate von Hexamethylendiisocyanat, Basonat^{®} HI 100 (BASF SE), Allophanate wie Ethylallophanat oder deren Mischungen, bevorzugt Hexamethylendiisiocyanat, Isophorondiisocyanat, besonders bevorzugt Hexamethylendiisiocyanat.

Bevorzugt wird die anionische Polymerisation in Gegenwart eines Katalysators durchgeführt. Unter einen Katalysator für die anionische Polymerisation wird im Rahmen dieser Anmeldung eine Verbindung verstanden, die die Bildung von Lactamanionen fördert oder die Lactamanionen selber.

Derartige Katalysatoren sind beispielsweise aus Polyamide, Kunststoff Handbuch Vol. ¾, ISBN 3-446-16486-3,1998, Carl Hanser Verlag, 49-52 bekannt. Darin wird die Verwendung von Na-Caprolactamat als Katalysator kombiniert mit Acyllactamderivaten beschrieben.

Als Katalysator eignen sich Natriumcaprolactamat, Kaliumcaprolactamat, Bromidmagnesiumcaprolactamat, Chloridmagnesiumcaprolactamat, Magnesiumbiscaprolactamat, Natriumhydrid, Natrium, Natriumhydroxid, Natriummethanolat, Natriumethanolat, Natriumpropanolat, Natriumbutanolat, Kaliumhydrid, Kalium , Kaliumhydroxid, Kaliummethanolat, Kaliumethanolat, Kaliumpropanolat, Kaliumbutanolat, bevorzugt Natriumhydrid, Natrium, Natriumcaprolactamat, besonders bevorzugt Natriumcaprolactamat. (Bruggolen® C 10, eine Lösung aus 18 Gew.-% Natriumcaprolactamat in Caprolactam).

Das Molverhältnis von Lactam zum Katalysator kann in weiten Grenzen variiert werden, beträgt in der Regel 1 : 1 bis 10000 : 1, bevorzugt 10 : 1 bis 1000 : 1, besonders bevorzugt 20 : 1 bis 300 : 1.

Das Molverhältnis von Lactam zum Aktivator kann in weiten Grenzen variiert werden, beträgt in der Regel 1 : 1 bis 10000 : 1, bevorzugt 10:1 bis 2000 : 1, besonders bevorzugt 20: 1 bis 1000 : 1.

Die erfindungsgemäßen Polyamid-Formteile haben als Polyamid-Basis beispielsweise Polyamid-3, Polyamid-4, Polyamid-5, Polyamid-6, Polyamid-7, Polyamid-8, Polyamid-9., Polyamid-10, Polyamid-11, Polyamid-12, Polyamid-13, Polyamid-14, Polyamid-15, Polyamid-16, Polyamid-17 und Polyamid-18 oder Co-Polyamiden wie Polyamid-4/6, Polyamid-5/6, Polyamid-4/5, Polyamid-6/7, Polyamid-6/8, Polyamid-6/9, Polyamid-6/10, Polyamid-6/12, Polyamid-4/12, Polyamid-4/10, Polyamid-5/10, Polyamid-5/12 , bevorzugt Polyamid-6, Polyamid-12, Polyamid-4/6, Polyamid-5/6, Polyamid-4/12, Polyamid-5/12, besonders bevorzugt Polyamid-6 und Polyamid-12, insbesondere Polyamid-6.

Die anionischen Polymerisation wird in der Regel bei einer Temperatur von 40 bis 200°C, bevorzugt 70 bis 180°C, besonders bevorzugt 100 bis 170°C durchgeführt. Üblicherweise wird die Reaktion bei Atmosphärendruck (Normaldruck) durchgeführt. Es ist jedoch prinzipiell auch eine Reaktionsführung bei einem Unterdruck möglich. Ebenso ist möglich, die Polymerisation bei einem Überdruck durchzuführen.

Die erfindungsgemäß in dem Polyamid-Formteil enthaltenen Mikrokapseln umfassen einen Kapselkern aus Latentwärmespeichermaterial und eine Kapselwand aus Polymer. Der Kapselkern besteht überwiegend, zu mehr als 95 Gew.-%, aus Latentwärmespeichermaterial. Der Kapselkern kann dabei, abhängig von der Temperatur, sowohl fest als auch flüssig sein.

Herstellungsbedingt wird ein Schutzkolloid eingesetzt, welches zumindest teilweise mit in die Kapselwand eingebaut sein kann und dann ebenfalls Bestandteil der Kapselwand ist. In der Regel weist insbesondere die Oberfläche des Polymers das Schutzkolloid auf. So können bis zu 10 Gew.-% bezogen auf das Gesamtgewicht der Mikrokapseln Schutzkolloid sein.

Latentwärmespeichermaterialien sind definitionsgemäß Substanzen, die in dem Temperaturbereich, in welchem eine Wärmeübertragung vorgenommen werden soll, einen Phasenübergang aufweisen. Das Latentwärmespeichermaterial weist einen fest/flüssig Phasenübergang im Temperaturbereich von -20 bis 120°C auf. Es handelt es sich bei dem Latentwärmespeichermaterial um eine lipophile Substanz mit einem fest/flüssig Phasenübergang im Temperaturbereich von - 20 bis 120°C.

Als geeignete Substanzen sind beispielhaft zu nennen:
- aliphatische Kohlenwasserstoffverbindungen wie gesättigte oder ungesättigte C₁₀-C₄₀-Kohlenwasserstoffe, die verzweigt oder bevorzugt linear sind, wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z.B. Cyclohexan, Cyclooctan, Cyclodecan;
- aromatische Kohlenwasserstoffverbindungen wie Benzol, Naphthalin, Biphenyl, o- oder n-Terphenyl, C₁-C₄₀-alkylsubstituierte aromatische Kohlenwasserstoffe wie Dodecylbenzol, Tetradecylbenzol, Hexadecylbenzol, Hexylnaphthalin oder Decylnaphthalin;
- gesättigte oder ungesättigte C₆-C₃₀-Fettsäuren wie Laurin-, Stearin-, Öl- oder Behensäure, bevorzugt eutektische Gemische aus Decansäure mit z.B. Myristin-, Palmitin- oder Laurinsäure;
- Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
- C₆-C₂₂-Dialkylether, insbesondere solche wie sie in der DE 10 2008 005 721 offenbart werden, auf die ausdrücklich Bezug genommen wird
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- halogenierte Kohlenwasserstoffe wie Chlorparaffin, Bromoctadecan, Brompentadecan, Bromnonadecan, Bromeicosan, Bromdocosan.

Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Vorteilhaft ist beispielsweise die Verwendung von reinen n-Alkanen, n-Alkanen mit einer Reinheit von größer als 80% oder von Alkangemischen, wie sie als technisches Destillat anfallen und als solche handelsüblich sind.

Weiterhin kann es vorteilhaft sein, den lipophilen Substanzen in ihnen lösliche Verbindungen zuzugeben, um so die zum Teil bei den unpolaren Substanzen auftretende Kristallisationsverzögerung zu verhindern. Vorteilhaft verwendet man, wie in der US-A 5 456 852 beschrieben, Verbindungen mit einem 20 bis 120 K höheren Schmelzpunkt als die eigentliche Kernsubstanz. Geeignete Verbindungen sind die oben als lipophile Substanzen erwähnten Fettsäuren, Fettalkohole, Fettamide sowie aliphatische Kohlenwasserstoffverbindungen. Sie werden in Mengen von 0,1 bis 10 Gew.-% bezogen auf den Kapselkern zugesetzt.

Je nach Temperaturbereich, in dem die Wärmespeicherung gewünscht wird, werden die Latentwärmespeichermaterialien gewählt. Beispielsweise verwendet man für Wärmespeicher in Baustoffen in gemäßigtem Klima bevorzugt Latentwärmespeichermaterialien, deren fest/flüssig Phasenübergang im Temperaturbereich von 0 bis 60°C liegt. So wählt man in der Regel für Innenraumanwendungen Einzelstoffe oder Mischungen mit Umwandlungstemperaturen von 15 bis 30°C. Bei Solaranwendungen als Speichermedium oder zur Überhitzungsvermeidung von transparenter Wärmedämmung, wie in der EP-A-333 145 beschrieben, sind vor allem Umwandlungstemperaturen von 30-60°C geeignet. Für Anwendungen im Textilsektor sind vor allem Umwandlungstemperaturen von 0 bis 40 °C vorteilhaft, für Wärmeträgerflüssigkeiten von -10 bis 120°C.

Bevorzugte Latentwärmespeichermaterialien sind aliphatische Kohlenwasserstoffe besonders bevorzugt die oben beispielhaft aufgezählten. Insbesondere werden aliphatische Kohlenwasserstoffe mit 14 bis 20 Kohlenstoffatomen sowie deren Gemische bevorzugt.

Die mittlere Teilchengröße der Kapseln (Volumenmittel [D4,3] mittels Lichtstreuung) beträgt 1,5 bis 15 µm, bevorzugt 3 bis 10 µm. Dabei haben bevorzugt 90% der Teilchen eine Teilchengröße von weniger als der doppelten mittleren Teilchengröße.

Das Gewichtsverhältnis von Kapselkern zu Kapselwand beträgt im allgemeinen von 50 : 50 bis 95 : 5. Bevorzugt wird ein Kern/Wand-Verhältnis von 70 : 30 bis 93 : 7.

Die Polymere der Kapselwand enthalten im Allgemeinen mindestens 30 Gew.-%, in bevorzugter Form mindestens 40 Gew.-%, in besonders bevorzugter Form mindestens 50 Gew.-%, insbesondere mindestens 60 Gew.-%, ganz besonders bevorzugt mindestens 70 Gew.-% sowie bis zu 100 Gew.-%, bevorzugt höchstens 90 Gew.-%, insbesondere höchstens 85 Gew.-% und ganz besonders bevorzugt höchstens 80 Gew.-% mindestens eines Monomeren aus der Gruppe umfassend C₁-C₂₄-Alkylester der Acryl- und/oder Methacrylsäure, Acrylsäure, Methacrylsäure und Maleinsäure (Monomere I), einpolymerisiert, bezogen auf das Gesamtgewicht der Monomere.

Weiterhin enthalten die Polymere der Kapselwand bevorzugt mindestens 10 Gew.-%, bevorzugt mindestens 15 Gew.-%, vorzugsweise mindestens 20 Gew.-% sowie im Allgemeinen höchstens 70 Gew.-%, vorzugsweise höchstens 60 Gew.-% und in besonders bevorzugter Form höchstens 50 Gew.-% eines oder mehrerer bi- oder polyfunktionelle Monomere, welche in Wasser nicht löslich oder schwer löslich sind (Monomere II) einpolymerisiert, bezogen auf das Gesamtgewicht der Monomere.

Daneben können die Polymere bis zu 40 Gew.-%, vorzugsweise bis zu 30 Gew.-%, insbesondere bis zu 20 Gew.-% sonstige Monomere III einpolymerisiert enthalten. Vorzugsweise ist die Kapselwand nur aus Monomeren der Gruppen I und II aufgebaut.

Vorzugsweise wird das Kapselwandpolymer der Mikrokapseln aufgebaut aus

| | |
|---|---|
| 30 bis 100 Gew.-% | eines oder mehrerer Monomere (Monomere I) aus der Gruppe umfassend C₁-C₂₄-Alkylester der Acryl- und/oder Methacrylsäure, Acrylsäure, Methacrylsäure und Maleinsäure, |
| 0 bis 70 Gew.-% | eines oder mehrerer bi- oder polyfunktioneller Monomere (Monomere II), welche in Wasser nicht löslich oder schwer löslich ist und |
| 0 bis 40 Gew.-% | eines oder mehrerer sonstiger Monomere (Monomere III), |

jeweils bezogen auf das Gesamtgewicht der Monomere.

Als Monomere I eignen sich C₁-C₂₄-Alkylester der Acryl- und/oder Methacrylsäure sowie die ungesättigten C₃- und C₄-Carbonsäuren wie Acrylsäure, Methacrylsäure sowie Maleinsäure. Geeignete Monomere I sind iso-Propyl-, iso-Butyl-, sec.-Butyl- und tert.-Butylacrylat und die entsprechenden Methacrylate, sowie besonders bevorzugte Methyl-, Ethyl-, n-Propyl- und n-Butylacrylat und die entsprechenden Methacrylate. Generell werden die Methacrylate und Methacrylsäure bevorzugt.

Geeignete Monomere II sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20°C zu verstehen. Unter bi- oder polyfunktionellen Monomeren versteht man Verbindungen, die wenigstens zwei nichtkonjugierte ethylenische Doppelbindungen haben. Vornehmlich kommen Divinyl- und Polyvinylmonomere in Betracht. Sie bewirken eine Vernetzung der Kapselwand während der Polymerisation. Es können ein oder mehrere Divinylmonomere sowie ein oder mehrere Polyvinylmonomere sowie Divinylmonomere in Mischung mit Polyvinylmonomeren einpolymerisiert werden.

Geeignete Divinylmonomere sind Divinylbenzol und Divinylcyclohexan. Bevorzugte Divinylmonomere sind die Diester von Diolen mit Acrylsäure oder Methacrylsäure, ferner die Diallyl- und Divinylether dieser Diole. Beispielhaft seien Ethandioldiacrylat, Ethylenglykoldimethacrylat, 1,3-Butylenglykoldimethacrylat, Methallylmethacrylamid, Allylacrylat und Allylmethacrylat genannt. Besonders bevorzugt sind Propandiol-, Butandiol-, Pentandiol- und Hexandioldiacrylat und die entsprechenden Methacrylate.

Bevorzugte Polyvinylmonomere sind die Polyester von Polyolen mit Acrylsäure und/oder Methacrylsäure, ferner die Polyallyl- und Polyvinylether dieser Polyole, Trivinylbenzol und Trivinylcyclohexan. Besonders bevorzugt werden Trimethylolpropantriacrylat und -methacrylat, Pentaerythrittriallylether, Pentaerythrittetraallylether, Pentaerythrittriacrylat und Pentaerythrittetraacrylat sowie ihre technischen Mischungen.

Bevorzugt werden die Kombinationen aus Divinyl- und Polyvinylmonomeren wie aus Butandioldiacrylat und Pentaeritrittetraacrylat, Hexandioldiacrylat und Pentaeritrittetraacrylat, Butandioldiacrylat und Trimethylolpropantriacrylat sowie Hexandioldiacrylat und Trimethylolpropantriacrylat.

Als Monomere III kommen sonstige Monomere, die von den Monomeren I und II verschieden sind, wie Vinylacetat, Vinylpropionat, Vinylpyridin und Styrol oder α-Methylstyrol in Betracht. Besonders bevorzugt werden Itaconsäure, Vinylphosphonsäure, Maleinsäureanhydrid, 2-Hydroxyethylacrylat und -methacrylat, Acrylamido-2-methylpropansulfonsäure, Methacrylnitril, Acrylnitril, Methacrylamid, N-Vinylpyrrolidon, N-Methylolacrylamid, N-Methylolmethacrylamid, Dimethylaminoethylmethacrylat und Diethylaminoethylmethacrylat.

Das Herstellverfahren der Mikrokapseln ist eine so genannte in-situ-Polymerisation. Das Prinzip der Mikrokapselbildung basiert darauf, dass man aus den Monomeren, einem Radikalstarter, dem Schutzkolloid und der einzukapselnden lipophilen Substanz eine stabile Öl-in-Wasser-Emulsion herstellt. Anschließend startet man die Polymerisation der Monomeren durch Erwärmung und steuert sie gegebenenfalls durch weitere Temperaturerhöhung, wobei die entstehenden Polymere die Kapselwand bilden, welche die lipophile Substanz umschließt. Dieses allgemeine Prinzip wird beispielsweise in der DE-A-10 139 171 beschrieben, auf deren Inhalt ausdrücklich Bezug genommen wird.

Die Ausgangsemulsion wird mithilfe eines anorganischen Schutzkolloids stabilisiert. Geeignete. anorganische Schutzkolloide sowie ihre Einsatzmengen sind in der WO 2008/071649 genannt auf deren Offenbarung ausdrücklich Bezug genommen wird. Im allgemeinen werden die Schutzkolloide in Mengen von 0,1 bis 15 Gew.-%, vorzugsweise von 0,5 bis 10 Gew.-% eingesetzt, bezogen auf die Wasserphase. Für anorganische Schutzkolloide werden dabei bevorzugt Mengen von 0,5 bis 15 Gew.-%, bezogen auf die Wasserphase, gewählt.

Als anorganische Schutzkolloide, sind die sogenannte Pickering-Systeme zu nennen, die eine Stabilisierung durch sehr feine feste Partikel ermöglichen und in Wasser unlöslich, aber dispergierbar sind oder unlöslich und nicht dispergierbar in Wasser, aber benetzbar von der lipophilen Substanz sind.

Ein Pickering-System kann dabei aus den festen Teilchen allein oder zusätzlich aus Hilfsstoffen bestehen, die die Dispergierbarkeit der Partikel in Wasser oder die Benetzbarkeit der Partikel durch die lipophile Phase verbessern. Die Wirkweise und ihr Einsatz ist in der EP-A-1 029 018 sowie der EP-A-1 321 182 beschrieben, auf deren Inhalte ausdrücklich Bezug genommen wird.

Die anorganischen festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind hochdisperse Kieselsäuren, Magnesiumpyrophosphat und Tricalciumphosphat.

Die Pickering-Systeme können sowohl zuerst in die Wasserphase gegeben werden, als auch zu der gerührten Emulsion von Öl-in-Wasser zugegeben werden. Manche feinen, festen Partikel werden durch eine Fällung hergestellt, wie in der EP-A-1 029 018, sowie der EP-A-1 321 182 beschrieben.

Die hochdispersen Kieselsäuren können als feine, feste Teilchen in Wasser dispergiert werden. Es ist aber auch möglich, sogenannte kolloidale Dispersionen von Kieselsäure in Wasser zu verwenden. Solch kolloidale Dispersionen sind alkalische, wässrige Mischungen von Kieselsäure. Im alkalischen pH-Bereich sind die Partikel gequollen und in Wasser stabil. Für eine Verwendung dieser Dispersionen als Pickering-System ist es vorteilhaft, wenn der pH-Wert der Öl-in-Wasser Emulsion mit einer Säure auf pH 2 bis 7 eingestellt wird.

Geeignete auf SiO₂-basierende Schutzkolloide sind hochdisperse Kieselsäuren. Sie können als feine, feste Teilchen in Wasser dispergiert werden. Es ist aber auch möglich, sogenannte kolloidale Dispersionen von Kieselsäure in Wasser zu verwenden. Solch kolloidale Dispersionen sind alkalische, wässrige Mischungen von Kieselsäure. Im alkalischen pH-Bereich sind die Partikel gequollen und in Wasser stabil. Für eine Verwendung dieser Dispersionen als Schutzkolloid ist es vorteilhaft, wenn der pH-Wert der Öl-in-Wasser Emulsion mit einer Säure auf pH 2 bis 7 eingestellt wird. Bevorzugte kolloidale Dispersionen von Kieselsäure haben bei pH 9,3 eine spezifische Oberfläche im Bereich von 70 bis 90 m²/g.

Bevorzugt werden als SiO₂-basierende Schutzkolloide hochdisperse Kieselsäuren, deren mittleren Teilchengrößen im Bereich von 40 bis 150 nm bei pH-Werten im Bereich von 8 - 11 liegen. Beispielhaft seien Levasi1^{®} 50/50 (H.C.Starck), Köstrosol^{®} 3550 (CWK Bad Köstritz), und Bindzil^{®} 50/80 (Akzo Nobel Chemicals) erwähnt.

Ferner ist es möglich zur Costabilisierung Tenside, bevorzugt nichtionische Tenside zuzusetzen. Geeignete Tenside sind dem "Handbook of Industrial Surfactants" zu entnehmen, auf dessen Inhalt ausdrücklich Bezug genommen wird. Die Tenside können in einer Menge von 0,01 bis 10 Gew.-% bezogen auf die Wasserphase der Emulsion eingesetzt werden.

Die Herstellung der bevorzugten Mikrokapseln auf Polymethacrylatbasis sowie die dazu geeigneten Hilfsmittel wie Radikalstarter, gegebenenfalls Regler, ist bekannt und wird beispielsweise in der EP-A-1 029 018, DE 10 163 162 und WO 2008/071649 beschrieben, auf deren Offenbarung ausdrücklich Bezug genommen wird. So werden insbesondere die hierin als Radikalstarter für die radikalisch ablaufende Polymerisationsreaktion genannten Peroxo- und Azoverbindungen, zweckmäßigerweise in Mengen von 0,2 bis 5 Gew.-%, bezogen auf das Gewicht der Monomere, eingesetzt.

Mikrokapseln werden erfindungsgemäß eingesetzt, deren Öl-in-Wasseremulsion bei ihrer Herstellung mit einem anorganischen Schutzkolloid stabilisiert wurden.

Man kann auf diese Weise Mikrokapseln mit einer mittleren Teilchengröße im Bereich von 1,5 bis 15 µm herstellen, wobei die Teilchengröße in an sich bekannter Weise über die Scherkraft, die Rührgeschwindigkeit, und seine Konzentration eingestellt werden kann. Bevorzugt werden Mikrokapseln mit einer mittleren Teilchengröße im Bereich von 3 bis 10 µm insbesondere 3 bis 7 µm (Volumenmittel D [4,3] mittels Lichtstreuung).

Die Sprühtrocknung der Mikrokapseldispersion kann in üblicher Weise erfolgen. Im Allgemeinen wird so vorgegangen, dass die Eingangstemperatur des Warmluftstroms im Bereich von 100 bis 200°C, vorzugsweise 120 bis 160°C, und die Ausgangstemperatur des Warmluftstroms im Bereich von 30 bis 90°C, vorzugsweise 60 bis 80°C liegt. Das Versprühen der wässrigen Polymerisatdispersion im Warmluftstrom kann beispielsweise mittels Ein- oder Mehrstoffdüsen oder über eine rotierende Scheibe erfolgen. Die Abscheidung des Polymerisatpulvers erfolgt normalerweise unter Verwendung von Zyklonen oder Filterabscheidern. Die versprühte wässrige Polymerisatdispersion und der Warmluftstrom werden vorzugsweise parallel geführt. Gegebenenfalls setzt man zur Sprühtrocknung Sprühhilfsmittel zu, um die Sprühtrocknung zu erleichtern, oder bestimmte Pulvereigenschaften einzustellen, z.B. Staubarmut, Rieselfähigkeit oder verbesserte Redispergierbarkeit. Dem Fachmann sind eine Vielzahl von Sprühhilfsmitteln geläufig. Beispiele hierfür finden sich in DE-A 19629525, DE-A 19629526, DE-A 2214410, DE-A 2445813, EP-A 407889 oder EP-A 784449. Vorteilhafte Sprühhilfsmittel sind beispielsweise wasserlösliche Polymere vom Typ Polyvinylalkohol oder teilhydrolysierte Polyvinylacetate, Cellulosederivate wie Hydroxyethylcellulose, Carboxymethylcellulose, Methylcellulose, Methylhydroxyethylcellulose und Methylhydroxypropylcellulose, Stärke, Polyvinylpyrrolidon, Copolymere des Vinylpyrrolidons, Gelatine, bevorzugt Polyvinylalkohol und partiell hydrolysierte Polyvinylacetate sowie Methylhydroxypropylcellulose. Vorzugsweise arbeitet man ohne Zusatz von Sprühhilfsmitteln.

Die Mikrokapseln werden üblicherweise der Reaktionsmischung in Form eines Pulver zudosiert. Dabei ist es möglich sie einzeln zu dosieren, in Mischung mit einer Komponente wie dem Lactam, dem Katalysator oder dem Aktivator zuzugeben oder auch in beliebigen Kombinationen. Bevorzugt erfolgt die Zugabe in Mischung mit dem Lactam.

In der Regel werden bis zu 70 Gew.-Teile, bevorzugt 5 bis 50 Gew.-Teile, insbesondere 10 bis 40 Gew.-Teile Mikrokapseln auf 100 Gew.-Teile Monomer (Lactam) eingesetzt. Generell erlaubt das Polymerisationsverfahren den Zusatz von großen Mengen Mikrokapseln, ohne dass die Geschwindigkeit oder Vollständigkeit der Polymerisation beeinflusst wird. Die obere Grenze der Mikrokapselmenge ergibt sich daher aus den Produkteigenschaften. So wurde in einigen Fällen bei Mengen oberhalb von 70 Gew.-Teilen eine Abnahme der Zähigkeit des Gusspolyamids beobachtet.

In einer bevorzugten Ausführungsform enthalten die Polyamid-Formteile als weitere Komponente Füllstoff. Geeignete Füllstoffe sind beispielsweise wie Glas, Bornitrid, Aluminiumoxid, inerte Metalloxide/Hydroxide und Metalle sowie bevorzugt Kohlenstoffmodifikationen wie Graphit, Carbonfasern, Ruß und Carbonnanotubes. In der Regel wird der Füllstoff als Pulver eingesetzt. Vorteilhaft wird der Füllstoff in einer Menge von 0,1 bis 50 Gew.-% bezogen auf das Polyamid-Formteil eingesetzt. Es wurde beobachtet dass Füllstoff enthaltende Polyamid-Formteile besonders gute thermische Leitfähigkeit aufweisen und einen besonders raschen Temperaturausgleich ermöglichen bei gleichzeitig hoher Festigkeit.

Die Polyamid-Formteile enthalten bevorzugt 30 - 50 Gew-% Polyamid, 10 - 50 Gew.-% Mikrokapseln und 0 bis 50 Gew.-% Füllstoff jeweils bezogen auf das Polyamid-Formteil.

Die vorliegende Erfindung betrifft weiterhin ein Verfahren zur Herstelllung von Polyamid-Formteilen, indem man in einer Mischung enthaltend Aktivator, Lactam, Mikrokapseln, gegebenenfalls Katalysator und gegebenenfalls Füllstoff durch Temperaturerhöhung die Polymerisation startet.

Die erfindungsgemäßen Polyamid-Formteile zeigen gute anwendungstechnische Eigenschaften insbesondere eine gute Wärmespeicherkapazität.

Die erfindungsgemäßen Polyamid-Formteile eignen sich als Material zur Herstellung von Autoteilen wie Verkleidung von Rahmen, Armaturenbrettern und für den Innenraum von Fahrgastzellen.

Weiterhin eignen sie sich für Batteriegehäuse. In diesem Fall wählt man vorteilhaft ein Latentwärmespeichermaterial mit einer Schmelztemperatur im Bereich von 30 bis 50°C.

Eine weitere bevorzugte Anwendung ist die Herstellung von Formteilen für Warmhaltesysteme für Speisen. In diesem Fall wählt man vorteilhaft ein Latentwärmespeichermaterial mit einer Schmelztemperatur im Bereich von 70 bis 95°C.

Prinzipiell eignen sich die erfindungsgemäßen Polyamid-Formteile für jegliche Gehäuse für elektronische Kleingeräte wie Mobiltelefone, Laptops, iPads oder allgemein Kunstostoffartikel, die Metall als Material imitieren sollen.

Die nachfolgenden Beispiele sollen die Erfindung näher erläutern. Bei den Prozentangaben in den Beispielen handelt es sich um Gewichtsprozent sofern nicht anders angegeben.

Die Teilchengröße der Mikrokapseldispersion wurde mit einem Malvern Particle Sizer Typ 3600E bzw. einem Malvern Mastersizer 2000 gemäß einer Standardmessmethode bestimmt, die in der Literatur dokumentiert ist. Der D[v, 0,1] Wert besagt, dass 10 % der Teilchen eine Teilchengröße bis zu diesem Wert haben. Entsprechend bedeutet D[v, 0,5], dass 50 % der Teilchen und D[v, 0,9], dass 90 % der Teilchen eine Teilchengröße kleiner/gleich diesem Wert haben. Der Span-Wert ergibt sich aus dem Quotien-ten aus der Differenz D[v, 0,9] - D[v, 0,1]) und D[v, 0,5]. Der D[4,3]-Wert gibt das Volumenmittel der Teilchengrößenverteilung an.

### Beispiele

### Herstellung der Mikrokapseln

### Beispiel M1

**Wasserphase:**

| | |
|---|---|
| 856,88g | Wasser |
| 135,29 g | eines 50 gew.-%igen Silica-Sols (spez. Oberfläche ca. 80 m² /g) |
| 19,69 g | einer 2,5 gew.-%igen wässrigen Lösung von Methylhydroxypropylcellulose mit einem mittleren Molekulargewicht von 26000 g/mol |
| 2,60 g | einer 2,5 gew.-%igen wässrigen Natriumnitrit-Lösung |
| 10,25 g | einer 8 gew.%-igen Salpetersäure-Lösung in Wasser |

**Ölphase**

| | |
|---|---|
| 487,33 g | eines Gemischs im Wesentlichen linearer Paraffine mit einem Schmelzpunkt von ca. 26 °C |
| 43,32 g | Hexadecan (techn.) |
| 10,83 g | eines technischen Paraffins mit einem Schmelzpunkt von ca. 65 °C |
| 101,47 g | Methylmethacrylat |
| 33,83 g | Butandioldiacrylat |

**Zugabe 1**

| | |
|---|---|
| 1,13 g | einer 75% igen Lösung von t-Butylperpivalat in aliphat. Kohlenwasserstoffen |
| 1,35 g | Wasser |

**Zulauf 1**

| | |
|---|---|
| 19,40 g | einer 7 gew.-%igen wässrigen Natriumpersulfatlösung |

Die Wasserphase wurde bei 40 °C vorgelegt, in diese wurde die aufgeschmolzene und homogen gemischte Ölphase gegeben und für 40 Minuten mit einem schnelllaufenden Dissolverrührer (Scheiben-Durchmesser 5 cm) bei 3500 Upm dispergiert. Zugabe 1 wurde zugegeben. Die Emulsion wurde unter Rühren mit einem Ankerrüher in 60 Minuten auf 70 °C, innerhalb von weiteren 60 Minuten auf 90 °C aufgeheizt und für 60 Minuten bei 90 °C gehalten. Zu der entstandenen Mikrokapseldispersion wurde unter Rühren Zulauf 1 über 90 Minuten bei 90 °C dosiert und anschließend für 2 Stunden, bei dieser Temperatur gerührt. Dann wurde auf Raumtemperatur abgekühlt und mit wässriger Natronlauge neutralisiert. Es wurde eine Mikrokapseldispersion mit einer mittleren Teilchengröße von D [4,3] = 5,1 µm und einem Feststoffgehalt von 37,6 % erhalten.

Durch Zugabe von Verdickern nach Abkühlen auf Raumtemperatur kann in an sich bekannter Weise ein Aufrahmen verhindert werden.

Die hergestellte Dispersion wurde zum Erhalt eines pulverförmigen Produktes wie dem Fachmann bekannt in einem Sprühturm mit Einstoffdüse sprühgetrocknet. Dabei war die Eingangstemperatur des Heizgasstromes betrug 130 °C, die Ausgangstemperatur betrug 70 °C. Es wurden Sprühagglomerate mit einer mittleren Teilchengröße von D [4,3] = 194,3 µm erhalten.

Synthese von Polyamid-6 durch anionische Polymerisation von ε-Caprolactam Alle Polymerisationsreaktionen wurden bei 140°C unter Rühren in trockener N₂-atmosphäre in einem 250-ml-Glasreaktor durchgeführt.

### Beispiel PA1

34,6 g (293 mmol) ε-Caprolactam, 18 g Mikrokapseln des Beispiels M1 und 3,13 g (0,86 mmol) Aktivator Bruggolen® C20 (80% Gew.-% blockiertes Diisocyanat in ε-Caprolactam) wurden in einem Reaktor bei 140°C gemischt. Anschliessend wurde 4 g (5 mmol) Katalysator Bruggolen® C 10 (17% Gew.-% ε-Caprolactamat in ε-Caprolactam) wurde in die schmelzflüssige Mischung injiziert und die Polymerisation 20 Minuten fortschreiten gelassen und anschließend durch Abkühlen des Reaktors in Wasser (10°C) gestoppt. Man erhielt 58,6 g Polyamid 6 als Feststoff.

Das Polymer enthält 0,8% Rest Caprolactam und hat eine Lösungsviskosität von 212 (Lösungsviskosität gemäß ISO 307, bei einer Konzentration von 5 g/l in 96%iger Schwefelsäure).

### Eigenschaften des Formteils

Das in Beispiel PA1 hergestellte Formteil, enthaltend 31 Gew.-% Mikrokapseln wurde auf die Wärmespeicherkapazität und auf das Emissions-Verhalten hin untersucht.

### DSC-Messung

Die Wärmekapazität wurde durch eine dem Fachmann bekannte DSC-Messung erfasst. Es wurden 5,23 mg Mikrokapseln enthaltenden Formteils (31%) eingewogen und ab einer Temperatur von 35 °C mit einer Temperaturrampe von 1 K/min auf - 21 °C abgekühlt. Im anschließenden Heizlauf wurde mit einer Heizrate von 1 K/min. bis auf 42 °C aufgeheizt. Die erfasste Wärmekapazität betrug 34 J/g.

### Fogging-Test (Kondensation leicht flüchtiger Anteile im Produkt)

Apparatur: 2 Twist off Gläser mit Alu Deckel, enthaltendeine Alu Folie und eine Viton Dichtung. Thermostat Ministat, IKA Heizbad, Kühlplatte.

### Durchführung (Doppelbestimmung):

Jeweils 10,00g des Formteils wurden in die Twist Off Gläser eingewogen. Danach wurden Alu Rundscheiben in die Alu Deckel und darauf die Viton Dichtung eingelegt und die Deckel anschließend auf die Twist Off Gläser geschraubt. Die so vorbereiteten Gläser wurden in ein auf 80°C vorgeheizte IKA-Heizbad gestellt. Auf die Deckel der Gläser wurde die auf 15°C -mittels Thermostat abgekühlte Platte- gelegt. Nach 24 Stunden wurden die Gläser aus dem Heizbad genommen, die Aluscheiben entnommen und in einen Ecsikator gelegt um Restwasser zu entfernen. Nach einer Trocknungszeit von 24 Stunden wurden die Aluscheiben auf der Analysenwaage ausgewogen. Das analysierte Formteil emittierte eine Menge von 1,92 mg/g.

## Patentansprüche

1. Polyamid-Formteile erhältlich durch anionische Polymerisation eines Lactams enthaltend Mikrokapseln mit einem Kapselkern aus Latentwärmespeichermaterial und einem Polymer als Kapselwand, **dadurch gekennzeichnet, dass** der Kapselkern der Mikrokapseln eine lipophile Substanz mit einem fest/flüssig Phasenübergang im Temperaturbereich von -20 bis 120 °C ist, wobei die Mikrokapseln erhältlich sind, indem man eine Öl-in-Wasser-Emulsion, umfassend die Monomere, Radikalstarter, Schutzkolloid und die einzukapselnde lipophile Substanz, herstellt und die Polymerisation der Monomeren durch Erwärmung startet und gegebenenfalls durch weitere Temperaturerhöhung steuert, wobei die Öl-in-Wasser-Emulsion mit einem anorganischen Schutzkolloid stabilisiert wurde, wobei die Mikrokapseln eine mittlere Teilchengröße von 1,5 bis 15 µm, bestimmt als Volumenmittel [D4, 3] durch Lichtstreuung, aufweisen.

2. Polyamid-Formteile nach Anspruch 1, **dadurch gekennzeichnet, dass** das Lactam ausgewählt wird unter Caprolactam, Piperidon, Pyrrolidon, Lauryllactam oder deren Mischungen.

3. Polyamid-Formteile nach Anspruch 1, **dadurch gekennzeichnet, dass** man die Polymerisation in Gegenwart eines Aktivators durchführt.

4. Polyamid-Formteile nach einem der Ansprüche 1 bis 3, dass man die Polymerisation in Gegenwart eines Katalysators durchführt.

5. Polyamid-Formteile nach einem der Ansprüche 1 bis 4, **dadurch gekennzeichnet, dass** das Kapselwandpolymer der Mikrokapseln aufgebaut ist aus
| | |
|---|---|
| 30 bis 100 Gew.-% | eines oder mehrerer Monomere (Monomere I) aus der Gruppe umfassend C₁-C₂₄-Alkylester der Acryl- und/oder Methacrylsäure, Acrylsäure, Methacrylsäure und Maleinsäure, |
| 0 bis 70 Gew.-% | eines oder mehrerer bi- oder polyfunktioneller Monomere (Monomere II), welche in Wasser nicht löslich oder schwer löslich ist, wobei Schwerlöslichkeit eine Löslichkeit kleiner 60 g/l bei 20 °C bedeutet, und wobei bi- oder polyfunktionelle Monomere Verbindungen bezeichnen, die wenigstens zwei nichtkonjugierte ethylenische Doppelbindungen aufweisen, und |
| 0 bis 40 Gew.-% | eines oder mehrerer sonstiger Monomere (Monomere III), |
jeweils bezogen auf das Gesamtgewicht der Monomere.

6. Polyamid-Formteilen nach einem der Ansprüchen 1 bis5, **dadurch gekennzeichnet, dass** sie 30 - 50 Gew-% Polyamid, 10 - 50 Gew.-% Mikrokapseln und 0 bis 50 Gew.-% Füllstoff jeweils bezogen auf das Polyamid-Formteil enthalten.

7. Verfahren zur Herstellung von Polyamid-Formteilen gemäß Anspruch 3, **dadurch gekennzeichnet, dass** man in eine Mischung enthaltend Aktivator, Lactam, Mikrokapseln, gegebenenfalls Katalysator und gegebenenfalls Füllstoff durch Temperaturerhöhung die Polymerisation startet.

8. Verwendung der Polyamid-Formteile gemäß den Ansprüchen 1 bis 6 im Fahrzeugbau, als Batteriegehäuse, als Gehäuse für elektronische Kleingeräte und für Warmhaltesysteme für Speisen.

## Claims

1. A polyamide molding obtainable via anionic polymerization of a lactam comprising microcapsules with a capsule core made of latent-heat-accumulator material and a polymer as capsule wall, wherein the capsule core of the microcapsules is a lipophilic substance with a solid/liquid phase transition in the temperature range from -20 to 120°C, wherein the microcapsules are obtainable by producing an oil-in-water emulsion comprising the monomers, free-radical initiator, protective colloid, and the lipophilic substance to be encapsulated, and using heat to initiate the polymerization of the monomers, and optionally using further temperature increase to control this polymerization reaction, where the oil-in-water emulsion has been stabilized by an inorganic protective colloid, where the average particle size of the microcapsules is from 1.5 to 15 µm, determined as volume average [D4,3] by light scattering.

2. The polyamide molding according to claim 1, wherein the lactam is selected from caprolactam, piperidone, pyrrolidone, and laurolactam, and mixtures of these.

3. The polyamide molding according to claim 1, wherein the polymerization reaction is carried out in the presence of an activator.

4. The polyamide molding according to any of claims 1 to 3, wherein the polymerization reaction is carried out in the presence of a catalyst.

5. The polyamide molding according to any of claims 1 to 4, wherein the capsule-wall polymer of the microcapsules is composed of
| | |
|---|---|
| from 30 to 100% | by weight of one or more monomers (monomers I) from the group comprising C₁-C₂₄-alkyl esters of acrylic and/or methacrylic acid, acrylic acid, methacrylic acid, and maleic acid, |
| from 0 to 70% | by weight of one or more bi- or polyfunctional monomers (monomers II) which have no or little solubility in water, where little solubility means solubility smaller than 60 g/l at 20 °C, and where bi- or polyfunctional monomers are compounds which have at least two non-conjugated ethylenic double bonds, and |
| from 0 to 40% | by weight of one or more other monomers (monomers III), |
based in each case on the total weight of the monomers.

6. The polyamide molding according to any of claims 1 to 5, which comprises from 30 to 50% by weight of polyamide, from 10 to 50% by weight of microcapsules, and from 0 to 50% by weight of filler, based in each case on the polyamide molding.

7. A process for producing polyamide moldings according to claim 3, which comprises using temperature increase to initiate the polymerization reaction in a mixture comprising activator, lactam, microcapsules, optionally catalyst, and optionally filler.

8. The use of the polyamide moldings according to claims 1 to 6 in motor-vehicle construction, as battery housing, as housing for small electronic devices, and for heat-retention systems for foods.

## Revendications

1. Pièces façonnées en polyamide pouvant être obtenues par polymérisation anionique d'un lactame contenant des microcapsules présentant un noyau de capsule en matériau d'accumulation de chaleur latente et un polymère comme paroi de capsule, **caractérisées en ce que** le noyau des microcapsules est une substance lipophile présentant une transition de phase solide/liquide dans la plage de température de -20 à 120°C, les microcapsules pouvant être obtenues **en ce qu'**on prépare une émulsion huile-dans-eau, comprenant les monomères, un initiateur radicalaire, un colloïde de protection et la substance lipophile à encapsuler et on démarre la polymérisation des monomères par chauffage et le cas échéant par une autre augmentation de température, l'émulsion huile-dans-eau ayant été stabilisée par un colloïde de protection inorganique, les microcapsules présentant une grosseur moyenne de particule de 1,5 à 15 µm, déterminée en tant que moyenne volumique [D4, 3] par diffusion de la lumière.

2. Pièces façonnées en polyamide selon la revendication 1, **caractérisées en ce que** le lactame est choisi parmi le caprolactame, la pipéridone, la pyrrolidone, le lauryllactame ou leurs mélanges.

3. Pièces façonnées en polyamide selon la revendication 1, **caractérisées en ce qu'**on réalise la polymérisation en présence d'un activateur.

4. Pièces façonnées en polyamide selon l'une quelconque des revendications 1 à 3, **caractérisées en ce qu'**on réalise la polymérisation en présence d'un catalyseur.

5. Pièces façonnées en polyamide selon l'une quelconque des revendications 1 à 4, **caractérisées en ce que** le polymère de paroi des microcapsules est composé de
| | |
|---|---|
| 30 à 100% | en poids d'un ou de plusieurs monomères (monomères I) du groupe comprenant les esters C₁-C₂₄-alkyliques de l'acide acrylique et/ou méthacrylique, l'acide acrylique, l'acide méthacrylique et l'acide maléique, |
| 0 à 70% | en poids d'un ou de plusieurs monomères difonctionnels ou polyfonctionnels (monomères II), qui ne sont pas solubles ou qui sont peu solubles dans l'eau, où la faible solubilité dans l'eau signifie une solubilité inférieure à 60 g/l à 20°C et où "monomères difonctionnels ou polyfonctionnels" désigne des composés qui présentent au moins deux doubles liaisons éthyléniques non conjuguées, et |
| 0 à 40% | en poids d'un ou de plusieurs autres monomères (monomères III), |
à chaque fois par rapport au poids total des monomères.

6. Pièces façonnées en polyamide selon l'une quelconque des revendications 1 à 5, **caractérisées en ce qu'**elles contiennent 30-50% en poids de polyamide, 10-50% en poids de microcapsules et 0 à 50% en poids de charge, à chaque fois par rapport à la pièce façonnée en polyamide.

7. Procédé pour la préparation de pièces façonnées en polyamide selon la revendication 3, **caractérisé en ce qu'**on démarre la polymérisation dans un mélange contenant l'activateur, le lactame, les microcapsules, le cas échéant le catalyseur et le cas échéant une charge, par augmentation de la température.

8. Utilisation des pièces façonnées en polyamide selon les revendications 1 à 6 dans la construction de voitures, comme boîtier de batterie, comme boîtier pour petits appareils électroniques et pour des systèmes de conservation de chaleur destinés à des aliments.
